# EUROPÄISCHE PATENTSCHRIFT

(11) **EP 2 346 728 B1**
(45) Veröffentlichungstag und Bekanntmachung des Hinweises auf die Patenterteilung: **22.06.2016**
(21) Anmeldenummer: 09736141.4
(22) Anmeldetag: 07.10.2009
(51) Int. Cl.: B60T 17/08, F16D 65/28, F16J 15/32

(54) **PNEUMATISCHER BREMSZYLINDER**
PNEUMATIC BRAKE CYLINDER
CYLINDRE DE FREIN PNEUMATIQUE

(30) Priorität: 15.10.2008 DE 102008051680
(43) Veröffentlichungstag der Anmeldung: 27.07.2011
(73) Patentinhaber: KNORR-BREMSE Systeme für Schienenfahrzeuge GmbH, 80809 München (DE)
(72) Erfinder: ELSTORPFF, Marc-Gregory, 80638 München (DE); EBNER, Christian, 86161 Augsburg (DE); MATHIEU, Michael, 82178 Puchheim (DE); FUDERER, Erich, 82256 Fürstenfeldbruck (DE)
(74) Vertreter: Mattusch, Gundula
(86) Internationale Anmeldenummer: PCT/EP2009/007184
(87) Internationale Veröffentlichungsnummer: WO 2010/043324

(56) Entgegenhaltungen:
- EP-A1- 0 451 638
- DE-A1- 4 240 495
- DE-A1- 10 244 916
- DE-A1-102005 001 234
- GB-A- 2 339 868
- US-A- 4 541 640
- US-A1- 2007 129 497

## Beschreibung

Die Erfindung betrifft einen pneumatischen Bremszylinder nach dem Oberbegriff von Anspruch 1.

Derartige Bremszylinder werden unter anderem bei Schienenfahrzeugen eingesetzt. Dort werden sie häufig zur Betätigung einer Bremszange verwendet, mit deren Hilfe Bremsbeläge an eine Bremsscheibe angepresst werden.

In solchen pneumatischen Bremszylindern, wie sie beispielsweise in der
WO 2008/116571 beschrieben sind, sind Kolben vorgesehen, die zusammen mit der Innenwand des Bremszylinders einen Druckraum bilden. Der Spalt zwischen dem Kolben und der Innenwand des Bremszylinders muss über einen Dichtring abgedichtet werden, so dass sich in dem Druckraum ein entsprechender pneumatischer Druck aufbauen kann. Üblicherweise ist dieser Dichtring als separates Teil ausgebildet und wird mit dem Kolben durch Presspassung verbunden oder aber auch verschraubt. Bei der Verbindung des Dichtrings mit dem Kolben über Presspassung ist in dem Dichtring ein Stahlring einvulkanisiert. Um die Presspassung gewährleisten zu können, muss der Kolben vor dem Aufsetzen des Dichtrings an der Stelle des Presspassung noch speziell bearbeitet werden. Die Kosten für diesen Kolben und für die Montage des Kolbens sind verhältnismäßig hoch.

Bei einer Überholung des Bremszylinders lässt sich der Dichtring separat austauschen. So ein Austausch des Dichtrings muss bei einer Überholung erfolgen, da der Dichtring einem Verschleiß unterworfen ist. Ebenso tritt durch Alterung eine Versprödung des Dichtrings auf. Bei dieser Überholung wird der Kolben zusammen mit einem, normalerweise fest mit diesem über eine Verschraubung oder Verschweißung verbundenen Kolbenrohr ausgebaut und der alte Dichtring entfernt. Nun wird ein neuer Dichtring montiert und der Kolben mit Kolbenrohr wieder in den Bremszylinder eingebaut. Der Montageaufwand bei der Überholung eines Bremszylinders ist daher relativ hoch.

In der CN 2114067U ist der Kolben einer Hubkolbenpumpe gezeigt. Auf diesen Kolben ist ein Dichtglied mit einer in beide Bewegungsrichtung wirkenden Dichtfunktion aufvulkanisiert.

Der Erfindung liegt die Aufgabe zugrunde, einen pneumatischen Bremszylinder nach dem Oberbegriff von Anspruch 1 so auszugestalten, dass sowohl die Herstellkosten als auch die Montagekosten gesenkt werden können.

Gelöst wird die Aufgabe gemäß der Erfindung durch einen pneumatischen Bremszylinder mit den Merkmalen von Anspruch 1 und durch ein Verfahren zur Überholung eines solchen Bremszylinders nach Anspruch 10. Vorteilhafte Weiterbildungen und Ausgestaltungen ergeben sich aus den Unteransprüchen.

Dadurch, dass der Dichtring auf dem Kolben aufvulkanisiert ist, muss keine Demontage des alten Dichtrings und keine Montage eines neuen Dichtrings erfolgen. Es kann in einfacher Weise der komplette Kolben getauscht werden. Da bereits bei dem bisher gebräuchlichen Dichtring der Stahlring für den Presssitz in dem Dichtring einvulkanisiert werden musste, ist bei dem neuen Kolben kein zusätzlicher Vulkanisiervorgang erforderlich. Insbesondere wird aber die Montage bei der Herstellung des Bremszylinders als auch bei der Überholung des Bremszylinders erheblich vereinfacht, wodurch sich die Montagekosten reduzieren lassen.

Der Kolben ist vorteilhaft als Tiefziehteil gefertigt. Als Material für den Kolben wird Stahl verwendet. Der neue Kolben liegt in seinen Herstellkosten nur minimal über den Herstellkosten für den alten Dichtring mit dem einvulkanisierten Stahlring. Damit schlagen die verringerten Montagekosten auch bei einer Überholung des Bremszylinders fast vollständig zu Buche. Bei der Herstellung des Bremszylinders kommen zu den verringerten Montagekosten noch die verringerten Kosten des neuen Kolbens mit aufvulkanisiertem Dichtring gegenüber dem altem Kolben mit aufgepresstem Dichtring.

Besonders vorteilhaft ist der Kolben lose in den Bremszylinder eingelegt. Auch durch diese Maßnahme lassen sich nochmal erheblich Montagekosten, sowohl bei der Herstellung des Bremszylinders, als auch bei der Überholung des Bremszylinders, einsparen.

In dem Bremszylinder ist vorteilhaft ein Kolbenrohr verschiebbar gelagert, wobei das Kolbenrohr eine Anlagefläche aufweist, die mit einer Anlagefläche des Kolbens korrespondiert. Der Kolben erhält auf diese Weise einen großflächigen Kontakt zu dem Kolbenrohr, so dass auf eine Verschraubung oder Verschweißung verzichtet werden kann.

Bei den bisher üblichen Bremszylindern wurde das von einer Nachstelleinrichtung auf das Kolbenrohr übertragene Drehmoment, beispielsweise über eine feste Verbindung zwischen Kolbenrohr und Kolben, auf den Kolben übertragen. Über Führungsstifte, die an dem Kolben angebracht sind und die mit entsprechenden Aussparungen im Gehäuse korrespondieren, wurde das Drehmoment in das Gehäuse eingeleitet.

Bei dem erfindungsgemäßen Bremszylinder wird das Kolbenrohr dagegen über Gleitsteine an einer Drehung gegenüber dem Bremszylinder gehindert. Diese Gleitsteine sind vorteilhaft an dem Gehäuse des Bremszylinders befestigt und treten durch Langlöcher hindurch, die in dem Kolbenrohr vorgesehen sind. Auf diese Weise lässt sich das Kolbenrohr in Richtung seiner Längsachse verschieben, leitet aber ein auf das Kolbenrohr übertragenes Drehmoment über die Gleitsteine in das Gehäuse des Bremszylinders ein. Auf eine starre Verbindung zwischen Kolbenrohr und Kolben, wie beispielsweise eine Verschraubung oder Verschweißung, kann auch aus diesem Grund verzichtet werden.

Der Dichtring umschließt den Kolbenrand vorteilhaft an drei Seiten. Dadurch wird eine sichere Verbindung zwischen Kolbenrand und Dichtring gewährleistet. Die Festigkeit dieser Verbindung ließe sich noch erhöhen, wenn der Kolbenrand durch Prägung oder Biegung entsprechend geformt würde. Auf diese Weise ließe sich beispielsweise eine größere und unregelmäßig geformte Kontaktfläche zwischen dem Kolbenrand und dem Dichtring erreichen. Die Innigkeit der Verbindung würde dadurch gesteigert werden.

Der Dichtring weist einen parallel zu der inneren Seitenwand des Bremszylinders angeordnete Dichtlippe auf. Diese Dichtlippe, des aus einem Elastomer bestehenden Dichtrings, ist insbesondere für die Abdichtung des Spalts zwischen dem Kolben und der Innenwand des Bremszylinders und damit für die Abdichtung des Druckraums verantwortlich. Da diese Dichtlippe nicht direkt von dem starren Kolbenrand unterstützt wird, legt sie sich besonders gut an der Innenwand des Bremszylinders an und kann so Durchmessertoleranzen der Innenwand des Bremszylinders ausgleichen.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: einen Schnitt durch einen erfindungsgemäßen pneumatischen Bremszylinder,
- Fig. 2 und 3: Detaildarstellungen von dem in Fig. 1 gezeigten Bremszylinder in verschiedenen Arbeitszuständen,
- Fig. 4: einen Schnitt durch den Kolben aus dem Bremszylinder nach Fig. 1.

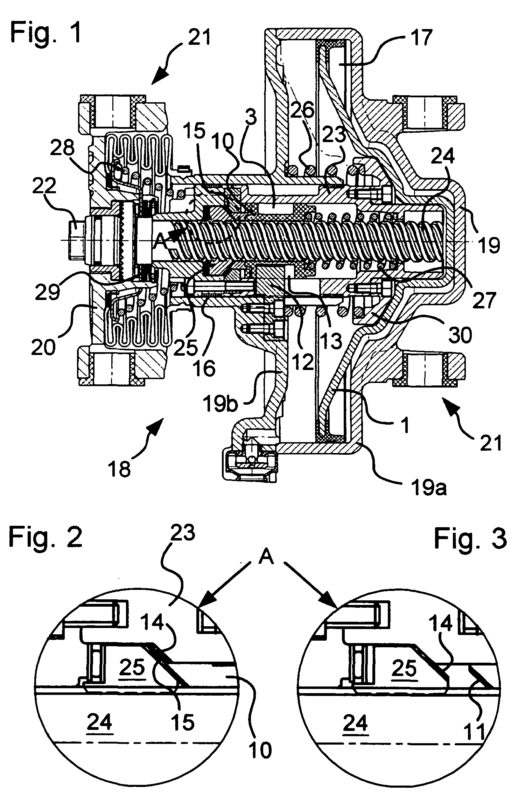

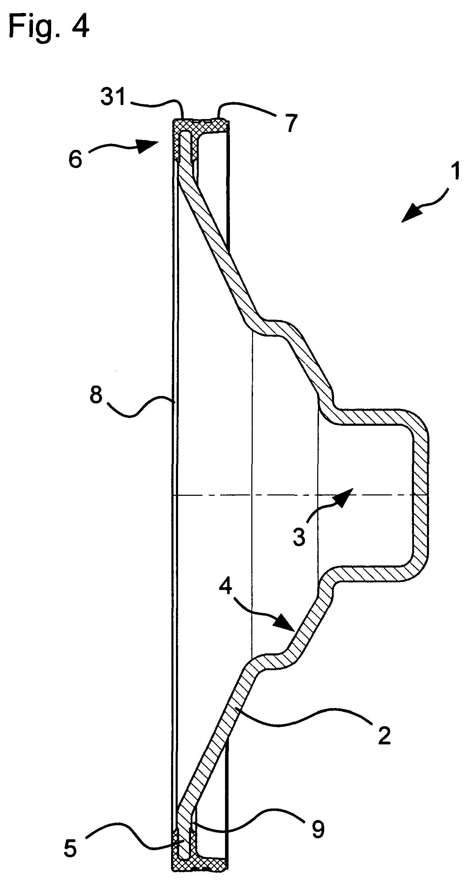

Der in Fig. 4 dargestellte neue Kolben 1 ist als Tiefziehteil 2 ausgebildet und aus Stahlblech gefertigt. In der Mitte des Kolbens 1 ist die Kolbenrohraufnahme 3 vorgesehen, mit der der Kolben 1 über das in Fig. 1 gezeigte Kolbenrohr 23 gestülpt wird. Eine direkte Verbindung zwischen der Kolbenrohraufnahme 3 und dem Kolbenrohr 23 ist nicht vorgesehen. Die Einwirkung des Kolbens 1 auf das Kolbenrohr 23 erfolgt vielmehr über die ringförmige, konisch ausgebildete Anlagefläche 4 des Kolbens 1, über die der Kolben 1 auch zentriert wird, sobald er mit Druck beaufschlagt wird. In einem anderen, hier nicht gezeigten Ausführungsbeispiel kann der Kolben aber auch vom Gehäuse des Bremszylinders aufgenommen und durch dieses geführt werden.

Auf den Kolbenrand 5 ist der Dichtring 6 aufvulkanisiert. Der Dichtring ist L-förmig ausgebildet, wobei der eine Schenkel den Kolbenrand 5 nutartig umgibt. Die in dem Schenkel ausgebildete Nut wird durch die Unterlippe 8 und die Oberlippe 9 begrenzt. Unterlippe 8 und Oberlippe 9 sind soweit über den Kolbenrand 5 gezogen, dass eine innige Verbindung zwischen dem Tiefziehteil 2 und dem Dichtring 6 entsteht. Die Verbindung zwischen Unterlippe 8 und Oberlippe 9 wird durch die Führungsfläche 31 gebildet, die eine sichere Führung des Kolbens 1 in dem Bremszylinder gewährleistet. Die etwa im 90° Winkel von der Oberlippe 9 abstehende, radial vorgespannte Dichtlippe 7 bildet die eigentliche Abdichtung für den Druckraum 17 (siehe Fig. 1). Der Dichtring 6 ist aus einem Elastomer gefertigt, das sich gut an die Innenwand des Gehäuses 19 des Bremszylinders 18 anpasst.

Der Einsatz des neuen Kolbens 1 wird an den in Fig. 1 dargestellten pneumatischen Bremszylinder erläutert. Die Befestigungen 21 für eine Bremszange befinden sich zum einen an dem Joch 20 und zum anderen an dem Gehäuse 19, welches aus einem Zylinder 19a und einem Deckel 19b zusammengesetzt ist. Zum Betätigen der Bremse muss die hier nicht dargestellte Bremszange auseinander gedrückt werden, dass bedeutet, dass der Abstand zwischen dem Joch 20 und dem Gehäuse 19 vergrößert werden muss.

In dem Gehäuse 19 ist der Kolben 1 vorgesehen. Durch den Kolben 1 und den Zylinder 19a des Gehäuses 19 wird der Druckraum 17 gebildet. Der Druckluftanschluss, über den Druckluft dem Druckraum 17 zugeführt wird, ist in dieser Darstellung nicht sichtbar. Von dem Kolben 1 wird das Kolbenrohr 23 betätigt. Der Kolben 1 ist jedoch nicht fest mit dem Kolbenrohr 23 verbunden sondern lose in den Bremszylinder eingelegt. Die Betätigung des Kolbenrohrs 23 erfolgt lediglich über die ringförmige, konisch ausgebildete Anlagefläche 4, mit der der Kolben 1 auf einen mit dem Kolbenrohr 23 verschraubten Federteller 30 drückt.

In dem Kolbenrohr 23 sind Langlöcher vorgesehen, durch die sich Gleitsteine 12 erstrecken, die mit dem Gehäuses 19 verschraubt sind. Durch diese Maßnahme wird eine Verdrehung des Kolbenrohrs 23 gegenüber dem Gehäuse 19 verhindert, eine Längsverschiebung des Kolbenrohrs 23 dagegen zugelassen. Bei der Längsverschiebung wird das Kolbenrohr 23 durch die ringförmigen Gleitbänder 16 an der Innenwand des Gehäuses 19 abgestützt. Der Kolben 1 und das Kolbenrohr 23 werden durch die Kolbenrückdruckfeder 26, die sich an dem Deckel 19a des Gehäuses 19 und dem Federteller 30 des Kolbenrohrs 23 abstützt, in ihrer Ruhelage gehalten.

In dem Kolbenrohr 23 befindet sich die Spindel 24. Durch die Verstellmutter 25 wird die Spindel 24 in ihrer Position kontrolliert. Verstellmutter 25 und Spindel 24 stehen über ein nicht selbsthemmendes Gewinde miteinander in Verbindung, so dass eine Kraft in Richtung der Längsachse der Spindel 24 ein Drehmoment auf die Verstellmutter 25 ausübt. Diese Kraft wird auf die Spindel 24 von der Kegelfeder 28 ausgeübt, die sich an dem Joch 20 und dem Kolbenrohr 23 abstützt. Die Kegelfeder 28 übt somit eine Kraft aus, die versucht die Spindel 24 aus dem Kolbenrohr 23 herauszuziehen.

In dem Kolbenrohr 23 ist eine Steuerhülse 10 vorgesehen. Diese Steuerhülse 10 ist als Verbundteil aufgebaut, wobei ein Kupplungsring mit einer Gleithülse verbunden wurde. Der Kupplungsring ist als Stahl-Fließpressteil ausgeführt. Die freie Stirnseite des Zahnrings 9 ist mit einer schrägen Innenverzahnung 11 versehen. In die Gleithülse sind zwei gegenüberliegende Gleitkanäle eingearbeitet. In diese Gleitkanäle greifen die Gleitsteine 12 ein. Die Breite der Gleitsteine 12 ist exakt an die Breite der Gleitkanäle angepasst, so dass bei einer Fixierung der Gleitsteine 12 keine Drehbewegung der Steuerhülse 10 möglich ist. Um die Gleitsteine 12 fixieren zu können, sind Befestigungsbohrungen vorgesehen, die zur Aufnahme von Schrauben dienen. Die Längsausdehnung der Gleitkanäle ist so bemessen, dass beim Eingreifen der Gleitsteine 12 der Einstellhub 13 verbleibt. Die Bedeutung des Einstellhubs 13 wird weiter unten bei der Funktionsbeschreibung des Bremszylinders näher erläutert.

Die Verstellmutter 25 weist an ihrer schrägen Stirnseite eine Außenverzahnung 14 auf (siehe insbesondere Fig. 2 und 3, die das in Fig. 1 mit A bezeichnete Teil vergrößert und in verschiedenen Arbeitszuständen darstellen). In Lösestellung der Bremse ist die Innenverzahnung 11 der Steuerhülse 10 mit der Außenverzahnung 14 der Verstellmutter 25 in Eingriff. Die Steuerhülse 10 ist über die Gleitsteine 12, die mit dem Gehäuse 19 verschraubt sind, an einer Verdrehung gehindert. Durch den Eingriff der Innenverzahnung 11 der Steuerhülse 10 mit der Außenverzahnung 14 der Verstellmutter 25 wird diese ebenfalls an einer Verdrehung gehindert. Die Steuerhülse 10 wird über die Verriegelungsfeder 27 vorgespannt, die sich an der Steuerhülse 10 und an dem Kolbenrohr 23 abstützt. Mit Hilfe der Tellerfeder 29 wird ein mit der Spindel 24 verbundener Zahnkranz in eine Verzahnung des Jochs 20 gedrückt, so dass eine Drehung der Spindel 24 gegenüber dem Joch 20 verhindert wird.

Im Folgenden soll die Funktion des Bremszylinders 18 beschrieben werden:
Durch eine Erhöhung des pneumatischen Drucks im Druckraum 17 wird der Kolben 1 nach links gedrückt. Dabei betätigt er das Kolbenrohr 23 und drückt dieses ebenfalls entgegen der Kraft der Kolbenrückdruckfeder 26 nach links. Die durch die Verriegelungsfeder 27 vorgespannte Steuerhülse 10 wird mit ihrer Innenverzahnung 11 auf die Außenverzahnung 14 der Verstellmutter 25 gedrückt und bewegt sich zusammen mit Kolbenrohr 23, Spindel 24, Verstellmutter 25 und Joch 20 ebenfalls nach links. Die Kolbenrohrverzahnung 15 ist dagegen nicht in Eingriff mit der Außenverzahnung der Verstellmutter 25. Dieser Zustand ist in Fig. 2 dargestellt.

In dem Moment, in dem sich die Steuerhülse 10 soweit nach links verschoben hat, dass sich der Einstellhub 13 zwischen den Gleitsteinen 12 und der Begrenzung der Gleitkanäle schließt, kommen die hier nicht gezeigten Bremsbeläge an der Bremsscheibe zur Anlage. Ab diesem Zeitpunkt wird über das Joch 20 ein Gegendruck aufgebaut. Da sich der Einstellhub 13 jetzt geschlossen hat, kann die Steuerhülse 10 an einer weiteren Bewegung des Kolbenrohrs 23 nicht mehr teilnehmen.

Das Kolbenrohr 23 wird nun um einen geringen Betrag weiter nach links, entgegen der Kraft der Kegelfeder 28, verschoben, während das Joch 20, Spindel 24 und Verstellmutter 25 an gleicher Stelle verharren. Durch diese Verschiebung des Kolbenrohrs 23 gegenüber der Verstellmutter 25 kommt die Außenverzahnung 14 der Verstellmutter 25 außer Eingriff mit der Innenverzahnung 11 der Steuerhülse 10. Gleichzeitig kommt die Außenverzahnung 14 jedoch in Eingriff mit der Kolbenrohrverzahnung 15.

Bei weiterem Druckaufbau im Druckraum 17 werden die Bremsbeläge gegen die Bremsscheibe gepresst, wobei das Kolbenrohr 23 mit großer Kraft gegen die Verstellmutter 25 gedrückt wird. Durch diese gegeneinander gerichteten Kräfte von Kolben 1 und Kolbenrohr 23 auf der einen Seite, sowie Joch 20, Spindel 24 und Verstellmutter 25 auf der anderen Seite, wird ein Drehmoment auf die Verstellmutter 25 ausgeübt. Dieses Drehmoment wird durch die Kolbenrohrverzahnung 15 aufgenommen und auf das Kolbenrohr 23 übertragen. Über die Gleitsteine 12 geht das Drehmoment auf das Gehäuse 19 über. Das Gehäuse 19 ist über die Befestigungen 21 so mit der Bremszange verbunden, dass das Drehmoment hier endgültig aufgefangen wird. Dieser Zustand von Kolbenrohr 23, Verstellmutter 25 und Steuerhülse 10 ist in Fig. 3 dargestellt.

Beim Lösen der Bremse löst sich auch die Kolbenrohrverzahnung 15 wieder von der Außenverzahnung 14 der Verstellmutter 25. Gleichzeitig kommt die Außenverzahnung 14 der Verstellmutter 25 wieder in Eingriff mit der Innenverzahnung 11 der Steuerhülse 10.

Während also bei einem normalen Bremsvorgang keine Drehung der Verstellmutter 25 zugelassen wird, muss sich die Verstellmutter 25 drehen können, wenn eine Nachstellung aufgrund einer Abnutzung von Bremsbelägen und/oder Bremsscheibe notwendig wird. Hat ein gewisser Verschleiß der Bremsbeläge stattgefunden, hat sich auch der Spalt zwischen Bremsbelägen und Bremsscheibe vergrößert. Es ist folglich ein größerer Kolbenhub notwendig, um die Bremsbeläge wieder in Anlage an die Bremsscheibe zu bringen.

Die Einleitung des Bremsvorgangs erfolgt wie bei einer normalen Bremsung. Kolben 1, Kolbenrohr 23 und Steuerhülse 10 bewegen sich zusammen nach links. Die Steuerhülse 10 nimmt an dieser Bewegung teil bis der Einstellhub 13 geschlossen ist. Nun wird die Innenverzahnung 11 der Steuerhülse 10 von der Außenverzahnung 14 der Verstellmutter 25 entkoppelt. Gegenüber einem normalen Bremsvorgang wird nun jedoch kein Gegendruck aufgebaut, da sich die Bremsbeläge noch nicht in Anlage an der Bremsscheibe befinden. Folglich koppelt die Kolbenrohrverzahnung 15 noch nicht in die Außenverzahnung 14 der Verstellmutter 25 ein. Über die Kegelfeder 28 wird auf Joch 20 und Spindel 24 eine Kraft ausgeübt, die versucht, die Spindel 24 nach links aus dem Kolbenrohr 23 herauszuziehen. Dabei wirkt auf die Verstellmutter 25 ein Drehmoment ein. Da die Außenverzahnung 14 der Verstellmutter 25 in diesem Zustand weder mit der Innenverzahnung 11 der Steuerhülse 10 noch mit der Kolbenrohrverzahnung 15 gekoppelt ist, kann die Verstellmutter 25 dem Drehmoment nachgeben und rotiert auf der Spindel 24. Durch diese Drehung der Verstellmutter 25 kann die Spindel 24 relativ zu der Verstellmutter 25 nach links herausgezogen werden.

Die Drehung der Verstellmutter 25 hält so lange an, bis die Bremsbeläge in Anlage an die Bremsscheibe gekommen sind. In diesem Moment wird wiederum ein Gegendruck aufgebaut, der eine Kopplung der Kolbenrohrverzahnung 15 mit der Außenverzahnung 14 der Verstellmutter 25 bewirkt. Der Nachstellvorgang ist damit abgeschlossen und weitere Bremsvorgänge finden solange wieder ohne Nachstellung statt, bis erneut ein bestimmter Verschleiß der Bremsbeläge aufgetreten ist.

Ist eine Nachstellung nicht mehr möglich, müssen die Bremsbeläge gewechselt werden. Dabei muss auch der Bremszylinder 18 wieder in seinen ursprünglichen Zustand zurückversetzt werden. Hierzu wird an dem Rückstellsechskant 22 angesetzt und die Spindel 24 wieder vollständig in das Kolbenrohr 23 hineingedreht. Bei dem ersten Bremsvorgang, nach der Montage der neuen Bremsbeläge, findet wiederum eine Nachstellung statt, so dass sich auch hier der vorbestimmte Abstand zwischen Bremsbelägen und Bremsscheibe automatisch richtig einstellt.

Da der Dichtring 6 einem Verschleiß und einer Alterung unterworfen ist und eine ausreichende Abdichtung des Spalts zwischen dem Kolben 1 und der Innenwand des Zylinders 19a des Gehäuses 19 nach einem gewissen Zeitraum nicht mehr gewährleistet werden kann, muss der Dichtring bei einer Überholung des Bremszylinders erneuert werden. Bei Verwendung des erfindungsgemäßen Bremszylinders wird zu diesem Zweck der komplette Kolben 1 ausgetauscht. Hierfür sind nur wenige Montageschritte notwendig, da der Kolben 1 nur lose in den Bremszylinder 18 eingelegt und nicht fest mit dem Kolbenrohr 23 verbunden ist. Der neue Kolben 1 ist ein preiswertes Tiefziehteil, so dass durch den Austausch des gesamten Kolbens auch keine hohen Materialkosten entstehen.

### Bezugszeichenliste:

- 1: Kolben
- 2: Tiefziehteil
- 3: Kolbenrohraufnahme
- 4: Anlagefläche des Kolbens
- 5: Kolbenrand
- 6: Dichtring
- 7: Dichtlippe
- 8: Unterlippe
- 9: Oberlippe
- 10: Steuerhülse
- 11: Innenverzahnung
- 12: Gleitstein
- 13: Einstellhub
- 14: Außenverzahnung der Verstellmutter
- 15: Kolbenrohrverzahnung
- 16: Gleitband
- 17: Druckraum
- 18: Bremszylinder
- 19: Gehäuse
- 19a: Zylinder
- 19b: Deckel
- 20: Joch
- 21: Befestigung für Bremszange
- 22: Rückstellsechskant
- 23: Kolbenrohr
- 24: Spindel
- 25: Verstellmutter
- 26: Kolbenrückdruckfeder
- 27: Verriegelungsfeder
- 28: Kegelfeder
- 29: Tellerfeder
- 30: Federteller
- 31: Führungsfläche

## Patentansprüche

1. Pneumatischer Bremszylinder mit einem Kolben (1) zur Übertragung des pneumatischen Drucks auf eine Bremse, mit einem Druckraum (17), der durch den Kolben (1) und einen Teil der Innenwand des Bremszylinders (18) begrenzt wird und mit einem Dichtring (6), der einen Spalt zwischen dem Kolben (1) und der Innenwand des Bremszylinders (18) abdichtet, **dadurch gekennzeichnet, dass** der Dichtring (6) auf den Kolben (1) aufvulkanisiert und der Kolben (1) lose in den Bremszylinder (18) eingelegt ist.

2. Pneumatischer Bremszylinder nach Anspruch 1, **dadurch gekennzeichnet, dass** der Kolben (1) als Tiefziehteil (2) gefertigt ist.

3. Pneumatischer Bremszylinder nach Anspruch 2, **dadurch gekennzeichnet, dass** das Tiefziehteil (2) aus Stahl gefertigt ist.

4. Pneumatischer Bremszylinder nach Anspruch 3, **dadurch gekennzeichnet, dass** in dem Bremszylinder (18) ein Kolbenrohr (23) verschiebbar gelagert ist, wobei das Kolbenrohr (23) eine Anlagefläche aufweist, die mit einer Anlagefläche (4) des Kolbens (1) korrespondiert.

5. Pneumatischer Bremszylinder nach Anspruch 4, **dadurch gekennzeichnet, dass** das Kolbenrohr (23) über Gleitsteine (12) an einer Drehung gegenüber dem Bremszylinder (18) gehindert wird.

6. Pneumatischer Bremszylinder nach Anspruch 5, **dadurch gekennzeichnet, dass** die Gleitsteine (12) an dem Gehäuse (19) befestigt sind und durch Langlöcher des Kolbenrohrs (23) hindurch treten.

7. Pneumatischer Bremszylinder nach Anspruch 1, **dadurch gekennzeichnet, dass** der Dichtring (6) den Kolbenrand (5) an drei Seiten umschließt.

8. Pneumatischer Bremszylinder nach Anspruch 7, **dadurch gekennzeichnet, dass** der Dichtring (6) eine im wesentlichen parallel zu der inneren Seitenwand des Bremszylinders (18) angeordnete Dichtlippe (7) aufweist.

9. Verfahren zur Überholung eines Bremszylinders nach einem der Ansprüche 1 bis 8, **dadurch gekennzeichnet, dass** der lose in den Bremszylinder (18) eingelegte Kolben (1) komplett mit Dichtring (6) getauscht wird.

## Claims

1. Pneumatic brake cylinder, comprising a piston (1) for transmitting a pneumatic pressure to a brake, a pressure chamber (17) bounded by the piston (1) and a part of the internal wall of the brake cylinder (18) and a sealing ring (6) sealing a gap between the piston (1) and the internal wall of the brake cylinder (18), **characterised in that** the sealing ring (6) is vulcanised onto the piston (1) and the piston (1) is loosely installed into the brake cylinder (18).

2. Pneumatic brake cylinder according to claim 1, **characterised in that** the piston (11) is produced as a deep-drawn component (2).

3. Pneumatic brake cylinder according to claim 2, **characterised in that** the deep-drawn component (2) is made of steel.

4. Pneumatic brake cylinder according to claim 3, **characterised in that** a piston tube (23) is displaceably installed into the brake cylinder (18), the piston tube (23) having a contact surface corresponding to a contact surface (4) of the piston (1).

5. Pneumatic brake cylinder according to claim 4, **characterised in that** the piston tube (23) is prevented from rotating relative to the brake cylinder (18) by way of sliders (12).

6. Pneumatic brake cylinder according to claim 5, **characterised in that** the sliders (12) are secured to the housing (19) and pass through slots of the piston (1).

7. Pneumatic brake cylinder according to claim 1, **characterised in that** the sealing ring (6) encloses the piston edge (5) on three sides.

8. Pneumatic brake cylinder according to claim 7, **characterised in that** the sealing ring (6) has a sealing lip (7) arranged substantially parallel to the internal side wall of the brake cylinder (18).

9. Method for overhauling a brake cylinder according to any of claims 1 to 8, **characterised in that** the piston (1) loosely installed into the brake cylinder (18) is exchanged complete with the sealing ring (6).

## Revendications

1. Cylindre de frein pneumatique, comprenant un piston (1) pour la transmission de la pression pneumatique à un frein, comprenant un espace (17) sous pression, qui est délimité par le piston (1) et par une partie de la paroi intérieure du cylindre (18) de frein, et comprenant une bague (6) d'étanchéité, qui rend étanche un intervalle entre le piston (1) et la paroi intérieure du cylindre (18) de frein, **caractérisé en ce que** la bague (6) d'étanchéité est vulcanisée sur le piston (1) et le piston (1) est inséré de manière lâche dans le cylindre (18) de frein.

2. Cylindre de frein pneumatique suivant la revendication 1, **caractérisé en ce que** le piston (1) est fabriqué sous la forme d'une pièce (2) à emboutir.

3. Cylindre de frein pneumatique suivant la revendication 2, **caractérisé en ce que** la pièce (2) à emboutir est en acier.

4. Cylindre de frein pneumatique suivant la revendication 3, **caractérisé en ce qu'**un tube (23) de piston est monté coulissant dans le cylindre (18) de frein, le tube (23) de piston ayant une surface de contact, qui correspond à une surface (4) de contact du piston (1).

5. Cylindre de frein pneumatique suivant la revendication 4, **caractérisé en ce que** le tube (23) de piston est, par des clavettes (12), empêché de tourner par rapport au cylindre (18) de frein.

6. Cylindre de frein pneumatique suivant la revendication 5, **caractérisé en ce que** les clavettes (12) sont fixées à la carcasse (19) et pénètrent dans des boutonnières du tube (23) de piston.

7. Cylindre de frein pneumatique suivant la revendication 1, **caractérisé en ce que** la bague (6) d'étanchéité entoure le bord (5) du piston sur trois côtés.

8. Cylindre de frein pneumatique suivant la revendication 7, **caractérisé en ce que** la bague (6) d'étanchéité a une lèvre (7) d'étanchéité disposée sensiblement parallèlement à la paroi latérale intérieure du cylindre (18) de frein.

9. Procédé de remise en état d'un cylindre de frein suivant l'une des revendications 1 à 8, **caractérisé en ce qu'**on change complètement, avec la bague (6) d'étanchéité, le piston (1) inséré de manière lâche dans le cylindre (18) de frein.
